# FASCICULE DE BREVET EUROPEEN

(11) **EP 3 160 188 B1**
(45) Date de publication et mention de la délivrance du brevet: **04.12.2019**
(21) Numéro de dépôt: 16194395.6
(22) Date de dépôt: 18.10.2016
(51) Int. Cl.: H04W 40/24, H04L 12/715

(54) **PROCÉDÉ DE COMMUNICATION AVEC CALCUL DE CHEMIN À PARTIR DE RÉSEAUX ÉLÉMENTAIRES, PROGRAMME D'ORDINATEUR, NOEUD D'INTERCONNEXION ET POSTE DE RADIOCOMMUNICATION ASSOCIÉS**
KOMMUNIKATIONSVERFAHREN MIT BERECHNUNG DES WEGS AUS GRUNDNETZWERKEN, COMPUTERPROGRAMM, VERBINDUNGSKNOTEN UND ZUGEHÖRIGE FUNKKOMMUNIKATIONSSTATION
COMMUNICATION METHOD WITH COMPUTATION OF A PATH FROM ELEMENTARY NETWORKS, RELATED COMPUTER PROGRAM, INTERCONNECTION NODE AND RADIO STATION

(30) Priorité: 19.10.2015 FR 1502199
(43) Date de publication de la demande: 26.04.2017
(73) Titulaire: Thales, 92400 Courbevoie (FR)
(72) Inventeur: SOULIE, Antoine, 92622 Gennevilliers Cedex (FR); CHEVALLIER, Michel, 92622 Gennevilliers Cedex (FR); ROUGIER, Franck, 92622 Gennevilliers Cedex (FR)
(74) Mandataire: Lavoix

(56) Documents cités:
- US-B1- 6 304 556

## Description

La présente invention concerne un procédé de communication au sein d'un système de communication comprenant une pluralité de réseaux élémentaires et un ou plusieurs nœuds d'interconnexion, chaque réseau élémentaire comportant plusieurs nœuds de radiocommunication reliés entre eux par des liaisons de radiocommunication selon un même protocole de radiocommunication, deux réseaux élémentaires voisins étant reliés via un ou plusieurs nœuds d'interconnexion, le procédé étant mis en oeuvre par chaque nœud d'interconnexion.

La présente invention concerne également un programme d'ordinateur comprenant des instructions logicielles, qui lorsqu'elles sont exécutées par un processeur, mettent en œuvre un tel procédé.

La présente invention concerne également un nœud d'interconnexion destiné à être connecté à au moins un réseau élémentaire au sein d'un système de communication comprenant une pluralité de réseaux élémentaires et un ou plusieurs nœuds d'interconnexion, ledit nœud d'interconnexion étant configuré pour mettre en œuvre un tel procédé.

La présente invention concerne également un poste de radiocommunication comprenant un tel nœud d'interconnexion et un ou plusieurs nœuds de radiocommunication.

L'invention concerne alors le domaine des radiocommunications au sein d'un système de communication comprenant plusieurs réseaux de radiocommunication, les réseaux de radiocommunication étant de préférence des réseaux ad hoc. De manière connue, un réseau ad hoc est dépourvu d'infrastructure fixe.

Les réseaux ad hoc sont notamment utilisés pour mettre en œuvre des communications tactiques entre des équipes militaires mobiles sur des zones de combat. Les nœuds de radiocommunication et les nœuds d'interconnexion sont alors par exemple mobiles, et utilisés dans des applications de télécommunications tactiques militaires.

On connaît du document EP 2 337 284 B1 un procédé de routage dans un tel système de communication. Ce procédé de routage détermine une topologie logique de nœuds d'interconnexion réseau en utilisant un protocole de routage à états de liens, également appelé protocole de routage pro-actif.

Le calcul d'un chemin de transmission d'au moins un paquet de données entre un nœud source et un nœud destinataire consiste alors à déterminer une succession de nœuds par lesquels chaque paquet doit transiter depuis le nœud source jusqu'au nœud destinataire, le calcul de ce chemin de transmission étant effectué en fonction de la topologie de nœuds déterminée.

Toutefois, un tel procédé de routage n'est pas très adapté pour des réseaux de communication instables, c'est-à-dire des réseaux dont la composition en nœuds évolue très fréquemment, en particulier des réseaux fonctionnant en gamme UHF (de l'anglais *Ultra-High Frequency*), avec des radiofréquences comprises entre 300 MHz et 3000 MHz. L'instabilité de l'état des liens se propage dans le système de communication et génère une charge de calcul, et une charge de trafic de signalisation, d'autant plus élevée que le nombre de liens entre paires de nœuds est important.

Cette charge de calcul et de signalisation est d'autant plus pénalisante pour les performances des services utilisateurs que la disponibilité de la ressource spectrale nécessaire à la mise en œuvre des réseaux UHF ad-hoc est limitée. En outre cette signalisation doit éventuellement être véhiculée sur des réseaux élémentaires de types VHF (de l'anglais *Very-High Frequency*), avec des radiofréquences comprises entre 30 MHz et 300 MHz, qui sont plus stables mais qui offrent en général un débit bien inférieur à celui des réseaux UHF, de telle sorte que l'instabilité des réseaux UHF provoque un engorgement des réseaux VHF.

En outre, le document US6304556 décrit un système de routage dans un réseau organisé en groupes de nœuds interconnectés.

Le but de l'invention est donc de proposer un procédé de communication qui soit plus adapté, notamment aux réseaux de communication instables.

A cet effet, l'invention a pour objet un procédé de communication au sein d'un système de communication comprenant une pluralité de réseaux élémentaires et un ou plusieurs nœuds d'interconnexion, chaque réseau élémentaire comportant plusieurs nœuds de radiocommunication reliés entre eux par des liaisons de radiocommunication selon un même protocole de radiocommunication, deux réseaux élémentaires voisins étant reliés via un ou plusieurs nœuds d'interconnexion,
le procédé étant mis en œuvre par chaque nœud d'interconnexion et comprenant les étapes suivantes :
- détermination d'un identifiant unique pour chaque réseau élémentaire auquel le nœud d'interconnexion est connecté ;
- transmission de chaque identifiant déterminé vers le ou les réseaux élémentaires autres que le réseau élémentaire correspondant à l'identifiant déterminé ; et
- calcul, à partir des identifiants de réseaux élémentaires, d'un chemin de transmission d'au moins un paquet de données entre un nœud source et un nœud destinataire, le chemin de transmission passant par un ou plusieurs réseaux élémentaires, le nœud source et le nœud destinataire étant chacun un nœud parmi un nœud de radiocommunication et un nœud d'interconnexion.

Le procédé de communication selon l'invention permet alors, en calculant à partir des identifiants de réseaux élémentaires le chemin de transmission entre le nœud source et le nœud destinataire, le chemin de transmission passant par un ou plusieurs réseaux élémentaires, d'être moins sensible à une instabilité du système de communication.

Autrement dit, la topologie du système de communication entre réseaux élémentaires à une stabilité nettement supérieure à celle de la topologie entre nœuds.

En outre, le procédé de communication selon l'invention permet un gain notable au niveau de la charge de calcul générée, typiquement d'un facteur compris entre 3 et 10, de par un nombre de liens entre réseaux élémentaires qui est bien plus faible que le nombre de liens entre nœuds, et également de par une meilleure stabilité des liens entre réseaux élémentaires par rapport aux liens entre nœuds.

Suivant d'autres aspects avantageux de l'invention, le procédé de communication comprend une ou plusieurs des caractéristiques suivantes, prises isolément ou suivant toutes les combinaisons techniquement possibles :
- les étapes de détermination et de transmission sont effectuées à nouveau en cas de connexion d'un nouveau réseau élémentaire au nœud d'interconnexion ou bien en cas de suppression d'une connexion entre le nœud d'interconnexion et un réseau élémentaire correspondant ;
- le procédé comprend en outre, après l'étape de détermination et préalablement à l'étape de transmission, l'étape suivante :
   + mise en file d'attente de l'identifiant déterminé avant son éventuelle transmission vers le ou les autres réseaux élémentaires ;
   l'étape de transmission de l'identifiant déterminé étant annulée lorsque l'identifiant déterminé est, au cours de l'étape de mise en file d'attente, reçu de la part d'un autre nœud d'interconnexion qui est connecté au ou aux mêmes réseaux élémentaires que ledit nœud d'interconnexion ;
- le procédé comprend en outre, après l'étape de détermination, l'étape suivante :
   + suppression d'un paquet reçu lorsque celui-ci est reçu de la part d'un autre nœud d'interconnexion connecté au ou aux mêmes réseaux élémentaires que ledit nœud d'interconnexion ;
- le procédé comprend en outre, après l'étape de calcul, l'étape suivante :
   + réémission d'un paquet reçu lorsque celui-ci n'a pas été préalablement reçu de la part d'un autre nœud d'interconnexion connecté au ou aux mêmes réseaux élémentaires que ledit nœud d'interconnexion, ledit paquet étant alors réémis vers le réseau élémentaire suivant, selon le chemin de transmission calculé ;
- lors de l'étape de détermination, l'identifiant unique du réseau élémentaire est déterminé en fonction d'une gamme de fréquences associée aux liaisons de radiocommunication reliant les nœuds de radiocommunication du réseau élémentaire, d'un canal de communication associé auxdites liaisons de radiocommunication et d'au moins une adresse d'un nœud de radiocommunication du réseau élémentaire ;
- le procédé comprend, lors de l'étape de calcul du chemin de transmission, le calcul d'une topologie des réseaux élémentaires au sein du système de communication en utilisant un protocole de routage à états de liens entre les réseaux élémentaires, et le chemin de transmission est alors calculé à partir de ladite topologie ;
- le calcul de la topologie des réseaux élémentaires au sein du système de communication est effectué à nouveau seulement lorsque deux réseaux élémentaires ne sont plus connectés ou bien lorsque deux réseaux élémentaires sont nouvellement connectés ;
- chaque protocole de radiocommunication est un protocole avec accès multiple à répartition dans le temps (TDMA) ;
- au sein d'un même réseau élémentaire, chaque nœud de radiocommunication est à portée radio d'au moins un autre nœud de radiocommunication dudit réseau élémentaire ; et
- tous les nœuds de radiocommunication d'un même réseau élémentaire sont configurés pour communiquer via une unique gamme de fréquences choisie parmi la gamme VHF et la gamme UHF.

L'invention a également pour objet un programme d'ordinateur comprenant des instructions logicielles, qui lorsqu'elles sont exécutées par un processeur, mettent en œuvre un procédé tel que défini ci-dessus.

L'invention a également pour objet un nœud d'interconnexion destiné à être connecté à au moins un réseau élémentaire au sein d'un système de communication comprenant une pluralité de réseaux élémentaires et un ou plusieurs nœuds d'interconnexion, chaque réseau élémentaire comportant plusieurs nœuds de radiocommunication reliés entre eux par des liaisons de radiocommunication selon un même protocole de radiocommunication, deux réseaux élémentaires voisins étant reliés via un ou plusieurs nœuds d'interconnexion,
le nœud d'interconnexion comprenant :
- un module de détermination configuré pour déterminer un identifiant unique pour chaque réseau élémentaire auquel ledit nœud d'interconnexion est connecté ;
- un module de transmission configuré pour transmettre chaque identifiant déterminé vers le ou les réseaux élémentaires autres que le réseau élémentaire correspondant à l'identifiant déterminé ; et
- un module de calcul configuré pour calculer, à partir des identifiants de réseaux élémentaires, un chemin de transmission d'au moins un paquet de données entre un nœud source et un nœud destinataire, le chemin de transmission passant par un ou plusieurs réseaux élémentaires, le nœud source et le nœud destinataire étant chacun un nœud parmi un nœud de radiocommunication et un nœud d'interconnexion.

L'invention a également pour objet un poste de radiocommunication comprenant un nœud d'interconnexion et un ou plusieurs nœuds de radiocommunication, dans lequel le nœud d'interconnexion est tel que défini ci-dessus.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
- la figure 1 est une représentation schématique de deux postes de radiocommunication selon l'invention, reliés entre eux via un relais de communication, chaque poste de radiocommunication comprenant un nœud d'interconnexion et deux nœuds de radiocommunication ;
- la figure 2 est une représentation schématique d'un système de communication comprenant une pluralité de réseaux élémentaires et un ou plusieurs nœuds d'interconnexion ;
- la figure 3 est un organigramme d'un procédé de communication selon l'invention ;
- la figure 4 est un organigramme illustrant un aspect particulier du procédé de communication de la figure 3, relatif à une mise en file d'attente, avant son éventuelle transmission, d'un identifiant déterminé d'un réseau élémentaire, pour éviter un envoi inutile de cet identifiant si cela a déjà été effectué précédemment par un autre nœud d'interconnexion ;
- la figure 5 est un organigramme illustrant un aspect particulier du procédé de communication de la figure 3, relatif au fait qu'une topologie des réseaux élémentaires au sein du système de communication est calculée à nouveau seulement lorsque deux réseaux élémentaires ne sont plus connectés ou bien lorsque deux réseaux élémentaires sont nouvellement connectés ;
- la figure 6 est un organigramme illustrant un aspect particulier du procédé de communication de la figure 3, relatif à un traitement effectué par un nœud d'interconnexion recevant un paquet de données ; et
- la figure 7 est une représentation schématique du système de communication illustrant l'aspect de la figure 6.

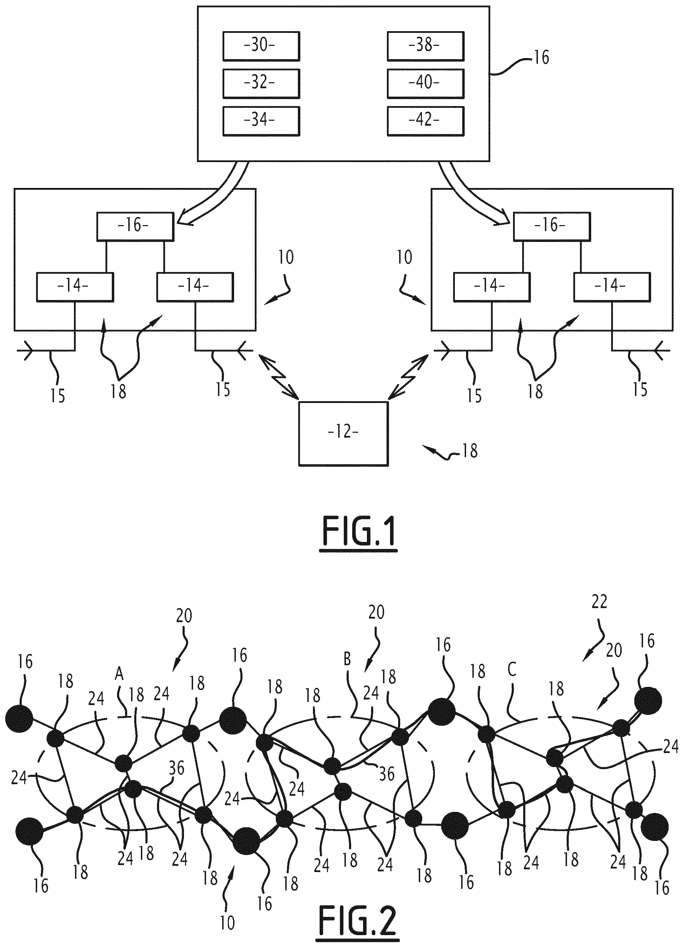

Sur la figure 1, deux postes de radiocommunication 10 sont reliés entre eux via un relais de communication 12.

Chaque poste de radiocommunication 10 comprend un ou plusieurs modules d'émission/réception 14, également appelés modems, une ou plusieurs antennes 15 et un nœud d'interconnexion 16. Dans l'exemple de la figure 1, chaque poste de radiocommunication 10 comprend un nœud d'interconnexion 16, deux modules d'émission/réception 14 et deux antennes 15.

Le relais de communication 12 et les modules d'émission/réception 14 forment chacun un nœud de radiocommunication 18.

Le relais de communication 12 est connu en soi, et est par exemple une passerelle de retransmission de données par ondes radioélectriques, connectée entre deux modules d'émission/réception 14 respectifs des deux postes de radiocommunication.

Chaque module d'émission/réception 14 est connu en soi, et est relié à une antenne 15 respective.

Chaque module d'émission/réception 14 est par exemple un module d'émission/réception VHF/UHF, adapté pour opérer soit dans la gamme VHF, en particulier dans la gamme de radiofréquences 30 MHz-300 MHz, soit dans la gamme UHF, en particulier dans la gamme de radiofréquences 300 MHz-3 000 MHz, en fonction d'une commande respective fournie par le nœud d'interconnexion 16 leur indiquant le mode d'opération VHF ou UHF.

En variante, l'un des modules d'émission/réception 14 est un module d'émission/réception VHF adapté pour opérer dans la gamme VHF, et l'autre module d'émission/réception 14 est un module d'émission/réception UHF adapté pour opérer dans la gamme UHF.

Chaque nœud d'interconnexion 16 est destiné à être connecté à au moins un réseau élémentaire 20 au sein d'un système de communication 22 comprenant une pluralité de réseaux élémentaires 20 et un ou plusieurs nœuds d'interconnexion 16, comme représenté sur la figure 2. Chaque réseau élémentaire 20 comporte plusieurs nœuds de radiocommunication 18 reliés entre eux par des liaisons de radiocommunication 24 selon un même protocole de radiocommunication, deux réseaux élémentaires 20 voisins étant reliés via un ou plusieurs nœuds d'interconnexion 16. Chaque protocole de radiocommunication est, par exemple, un protocole avec accès multiple à répartition dans le temps, également appelé protocole TDMA (de l'anglais *Time Division Multiple Access).*

Dans l'exemple de la figure 2, le système de communication 22 comprend trois réseaux élémentaires 20, respectivement notés A, B et C, deux réseaux voisins A, B, et respectivement B, C, étant à chaque fois reliés entre eux par deux nœuds d'interconnexion 16.

La liaison entre chaque nœud d'interconnexion 16 et le réseau élémentaire 20 associé est bidirectionnelle.

Chaque nœud d'interconnexion 16 comprend, comme représenté sur la figure 1, un module de détermination 30 configuré pour déterminer un identifiant unique pour chaque réseau élémentaire 20 auquel ledit nœud d'interconnexion 16 est connecté, un module de transmission 32 configuré pour transmettre chaque identifiant déterminé vers le ou les réseaux élémentaires 20 autres que le réseau élémentaire 20 correspondant à l'identifiant déterminé, et un module de calcul 34 configuré pour calculer, à partir des identifiants de réseaux élémentaires 20, un chemin de transmission 36 d'au moins un paquet de données entre un nœud source et un nœud destinataire, le chemin de transmission 36 passant par un ou plusieurs réseaux élémentaires 20, le nœud source et le nœud destinataire étant chacun un nœud parmi un nœud de radiocommunication 18 et un nœud d'interconnexion 16.

Dans l'exemple de la figure 2, le chemin de transmission 36 est représenté en trait épais, et les nœuds source et destinataire sont chacun un nœud d'interconnexion 16 respectif.

En complément facultatif, chaque nœud d'interconnexion 16 comprend en outre un module de mise en file d'attente 38 configuré pour mettre en file d'attente l'identifiant déterminé avant sa transmission vers le ou les autres réseaux élémentaires ; le module de mise en file d'attente 38 étant le cas échéant configuré en outre pour annuler la transmission de l'identifiant déterminé lorsque l'identifiant déterminé est, au cours de ladite mise en file d'attente, reçu de la part d'un autre nœud d'interconnexion 16 qui est connecté au ou aux mêmes réseaux élémentaires 20 que ledit nœud d'interconnexion 16.

En complément facultatif, chaque nœud d'interconnexion 16 comprend en outre un module de suppression 40 configuré pour supprimer un paquet de données reçu lorsque celui-ci est reçu de la part d'un autre nœud d'interconnexion 16 connecté au ou aux mêmes réseaux élémentaires 20 que ledit nœud d'interconnexion 16.

En complément facultatif, chaque nœud d'interconnexion 16 comprend en outre un module de réémission 42 configuré pour réémettre un paquet de données reçu lorsque celui-ci n'a pas été préalablement reçu de la part d'un autre nœud d'interconnexion 16 connecté au ou aux mêmes réseaux élémentaires 20 que ledit nœud d'interconnexion 16, ledit paquet étant alors réémis vers le réseau élémentaire 20 suivant, selon le chemin de transmission 36 calculé.

Chaque nœud d'interconnexion 16 comprend par exemple une unité de traitement d'informations, non représentée, formée de préférence d'un processeur et d'une mémoire associée au processeur. Le module de détermination 30, le module de transmission 32, et le module de calcul 34 sont alors, par exemple, réalisés chacun sous forme d'un logiciel apte à être stocké dans la mémoire et apte à être exécuté par le processeur. En complément facultatif, le module de mise en file d'attente 38, le module de suppression 40 et le module de réémission 42 sont également, par exemple, réalisés chacun sous forme d'un logiciel apte à être stocké dans la mémoire et à être exécuté par le processeur.

En variante, le module de détermination 30, le module de transmission 32, le module de calcul 34, et le cas échéant le module de mise en file d'attente 38, le module de suppression 40, et le module de réémission 42, sont réalisés chacun sous forme d'un composant logique programmable, tel qu'un FPGA (de l'anglais *Field Programmable Gate Array*)*,* ou encore sous forme d'un circuit intégré dédié, tel qu'un ASIC (de l'anglais *Application Specific Integrated Circuit).*

Chaque nœud d'interconnexion 16 correspond à la couche 3 du modèle OSI.

Chaque nœud de radiocommunication 18 correspond à la couche 2 du modèle OSI. Chaque nœud de radiocommunication 18 appartient à un seul réseau élémentaire 20.

Tous les nœuds de radiocommunication 18 d'un même réseau élémentaire 20 sont, par exemple, configurés pour communiquer via une unique gamme de fréquences, telle qu'une gamme de fréquences choisie parmi la gamme VHF et la gamme UHF.

Au sein d'un même réseau élémentaire 20, chaque nœud de radiocommunication 18 est à portée radio d'au moins un autre nœud de radio de communication 18 dudit réseau élémentaire 20.

Les réseaux élémentaires 20 sont identifiés par un plan de transmission, ce plan de transmission dépendant par exemple des fréquences de radiocommunication utilisées pour la transmission des données, de technologie de radiocommunication mise en œuvre, telle que la technologie VHF ou UHF, ou encore telle qu'une technologie de radiocommunication conforme à la norme 2G, 3G et/ou 4G.

L'identifiant unique du réseau élémentaire 20 est alors par exemple déterminé en fonction d'une gamme de fréquences associée aux liaisons de radiocommunications 24 reliant les nœuds de radiocommunication 18 dudit réseau élémentaire 20, d'un canal de radiocommunication associé auxdites liaisons de radiocommunication 24 et d'au moins une adresse d'un nœud de radiocommunication 18 du réseau élémentaire.

L'identifiant unique est alors, par exemple, obtenu par concaténation d'un champ contenant ladite adresse du nœud de radiocommunication, telle qu'une adresse MAC, d'un deuxième champ contenant l'information relative au canal de fréquence, et d'un troisième champ contenant l'information relative à la technologie utilisée, par exemple relative à la gamme de fréquences associée aux liaisons de radiocommunication 24.

Deux réseaux élémentaires 20 sont considérés comme étant raccordés, ou encore connectés entre eux, lorsqu'ils sont connectés via au moins un nœud d'interconnexion 16, le nombre de nœuds d'interconnexion 16 raccordant deux réseaux élémentaires 20 voisins étant variable et n'affectant pas la topologie des réseaux élémentaires 20 au sein du système de communications 22.

Chaque liaison de radiocommunication 24 est bidirectionnelle. Chaque liaison de radiocommunication 24 au sein d'un réseau élémentaire est de préférence une liaison mettant en œuvre un protocole avec accès multiple à répartition dans le temps (TDMA). Chaque liaison de radiocommunication 24 est adaptée pour transmettre les fréquences dans la gamme de fréquences associée au nœud de radiocommunication 18 qu'elle relie.

Le module de détermination 30 est configuré pour déterminer l'identifiant unique du ou de chaque réseau élémentaire 20 auquel est connecté le nœud d'interconnexion 16 dont le module de détermination 30 fait partie. Autrement dit, le module de détermination 30 est configuré pour construire une identité du ou de chaque réseau élémentaire 20 auquel est connecté le nœud d'interconnexion 16 auquel le module de détermination 30 appartient.

Le module de transmission 32 est ensuite configuré pour transmettre chaque identifiant déterminé, ou encore chaque identité construite, à destination des autres réseaux élémentaires 20 que celui pour lequel l'identifiant a été préalablement déterminé par le module de détermination 30. Le module de transmission 32 est de préférence configuré pour envoyer cet identifiant, également appelé identité, en mode diffusé vers tous ces autres réseaux élémentaires 20.

Le module de calcul 34 est alors configuré pour calculer, à partir des identifiants (ou identités) de réseaux élémentaires 20, le chemin de transmission 36 pour chaque paquet à envoyer depuis un nœud source vers un nœud destinataire correspondant, chaque chemin de transmission 36 calculé étant défini par le ou les réseaux élémentaires 20 à travers lesquels il passe.

Le module de calcul 34 est alors de préférence également configuré pour calculer une topologie des réseaux élémentaires 20 au sein du système de communication 22 en utilisant un protocole de routage à états de liens entre les réseaux élémentaires 20, le chemin de transmission 36 étant alors calculé à partir de ladite topologie. Le protocole de routage à états de liens est connu en soi, par exemple du document EP 2 337 284 B1, et n'est pas décrit à nouveau.

Le module de calcul 34 est de préférence configuré pour effectuer à nouveau le calcul de la topologie des réseaux élémentaires 20 au sein du système de communications 22 seulement lorsque deux réseaux élémentaires 20 ne sont plus connectés entre eux ou bien lorsque deux réseaux élémentaires 20 sont nouvellement connectés entre eux. Autrement dit, tant que la connectivité entre les réseaux élémentaires 20 pris deux à deux ne varie pas, la topologie des réseaux élémentaires 20 au sein du système de communication 22 n'est pas recalculée.

En cas de réception d'un message indiquant soit une disparition d'un lien entre un réseau élémentaire 20 auquel le nœud d'interconnexion 16 correspondant est connecté et un réseau élémentaire 20 adjacent audit réseau élémentaire, ou encore de réception d'un message indiquant une apparition d'un lien entre ledit réseau élémentaire 20 connecté et un réseau élémentaire 20 adjacent, le module de calcul 34 est alors configuré pour annoncer un changement de topologie des réseaux élémentaires 20 au sein du système de communications 22 seulement si un lien disparu était le dernier lien entre le réseau élémentaire 20 connecté et le réseau élémentaire adjacent considéré ou bien si un lien apparu est le premier lien entre le réseau élémentaire 20 connecté et le réseau élémentaire 20 adjacent considéré. Dans les autres cas, le module de calcul 34 est configuré pour ne pas transmettre le message préalablement reçu indiquant une telle disparition/apparition de lien.

Le module de mise en file d'attente 38 est configuré pour mettre en file d'attente l'identifiant (ou identité) déterminé avant de le transmettre aux autres réseaux élémentaires 20, ceci afin d'éviter de transmettre ledit identifiant déterminé lorsque cette transmission a déjà été effectuée par un autre nœud d'interconnexion 16 qui est connecté aux mêmes réseaux élémentaires 20 que ledit nœud d'interconnexion 16.

De manière analogue, afin d'éviter de transmettre plusieurs fois un même paquet entre deux réseaux élémentaires 20 voisins par différents nœuds d'interconnexion 16 raccordant ces deux réseaux élémentaires voisins, le module de suppression 40 est configuré pour supprimer un paquet reçu lorsque celui-ci a déjà été reçu de la part d'un autre nœud d'interconnexion 16 connecté aux mêmes réseaux élémentaires 20 que ledit nœud d'interconnexion 16.

Le module de réémission 42 est lui configuré pour réémettre un paquet reçu lorsque celui-ci n'a pas été préalablement reçu de la part d'un autre nœud d'interconnexion 16 connecté aux mêmes réseaux élémentaires 20 que ledit nœud d'interconnexion 16, cette réémission permettant alors d'assurer la transmission dudit paquet suivant le chemin de transmission calculé, depuis le nœud source jusqu'au nœud destinataire.

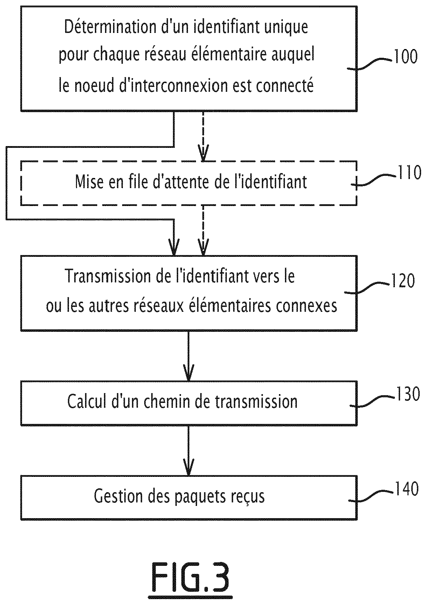

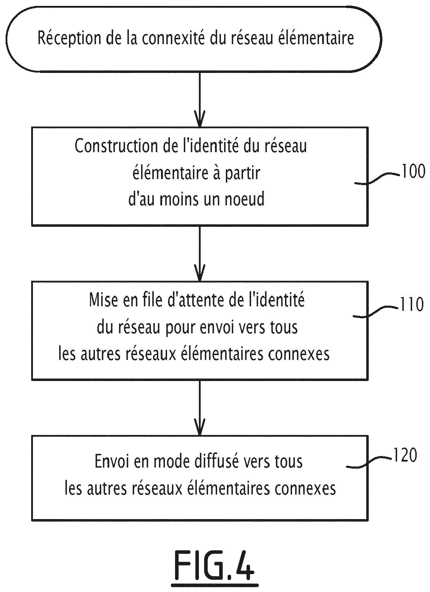

Le fonctionnement du système de communication 22 comprenant les réseaux élémentaires 20, et en particulier des nœuds d'interconnexion 16 raccordant ces différents réseaux élémentaires 20, va désormais être expliqué en regard de la figure 3 représentant un organigramme du procédé de communication selon l'invention, ainsi qu' en regard des figures 4 à 7 illustrant des aspects particuliers de ce procédé de communication.

Lors d'une étape initiale 100, le nœud d'interconnexion 16 détermine, via son module de détermination 30, l'identifiant unique, également appelé identité, de chaque réseau élémentaire auquel il est connecté, ceci à partir du moment où il a reçu de la part d'un nœud de radiocommunication 18 correspondant une connexité de ce réseau élémentaire 20, c'est-à-dire une liste des nœuds de radiocommunication 18 formant ce réseau élémentaire 20. La construction de l'identité de chaque réseau élémentaire 20 auquel le nœud d'interconnexion 16 est connecté est effectuée à partir des informations relatives à au moins un nœud de radiocommunication 18 contenu dans le réseau élémentaire 20 considéré.

L'identité dudit réseau est, par exemple, construite avec la plus petite adresse MAC parmi les adresses MAC des nœuds de radiocommunication 18 contenus dans ledit réseau, avec une information relative au canal de fréquence utilisé dans ledit réseau, et/ou avec une information relative à la technologie de radiocommunication utilisée dans ce réseau élémentaire, cette technologie étant par exemple la technologie VHF, la technologie UHF, ou encore une technologie conforme à une autre norme de radiocommunication, telle que la norme 2G, la norme 3G, ou la norme 4G.

En variante, l'adresse utilisée est une adresse dépendant des adresses, telles que les adresses MAC, de tous les nœuds de radiocommunication 18 contenus dans ledit réseau élémentaire 20. En variante encore, l'adresse utilisée est l'adresse, telle que l'adresse MAC, du nœud de radiocommunication 18 le plus stable, c'est-à-dire du nœud de radiocommunication 18 qui subit statistiquement le moins de changements de connexions avec son voisinage lorsque la topologie du réseau élémentaire évolue.

Après la détermination de l'identifiant unique de chaque réseau élémentaire 20 auquel le nœud d'interconnexion 16 est connecté, également appelée construction d'identité de chaque réseau élémentaire (étape 100), le nœud d'interconnexion 16 passe à l'étape 110 de mise en file d'attente, comme représenté sur la figure 4, ou bien directement à l'étape 120 de transmission de l'identifiant, cette étape 110 de mise en file d'attente étant optionnelle, comme représenté sur la figure 3.

Lors de l'étape de mise en file d'attente 110, le nœud d'interconnexion 16 met en file d'attente, via son module de mise en file d'attente 38, l'identifiant déterminé avant de le transmettre vers le ou les autres réseaux élémentaires 20, ceci afin d'éviter de renvoyer cet identifiant si cela a déjà été fait précédemment par un autre nœud d'interconnexion 16 connecté aux mêmes réseaux élémentaires 20 que lui.

Lors de cette étape de mise en file d'attente 110, lorsque le module de mise en file d'attente 38 constate que l'identifiant déterminé a déjà été préalablement reçu de la part d'un autre nœud d'interconnexion 16 qui est connecté aux mêmes réseaux élémentaires 20 que le nœud d'interconnexion 16 auquel il appartient, il annule la transmission de l'identifiant déterminé, et l'étape 120 correspondante n'est alors pas effectuée. Le cas échéant, le nœud d'interconnexion 16 passe directement à l'étape suivante 130 de calcul du chemin de transmission 36.

Sinon, lorsque le module de mise en file d'attente 38 constate qu'à l'expiration d'une temporisation prédéfinie correspondant à la mise en file d'attente, l'identifiant déterminé n'a pas été reçu de la part d'un autre nœud d'interconnexion 16 qui est connecté aux mêmes réseaux élémentaires 20 que le nœud d'interconnexion 16 auquel il appartient, il valide alors la transmission dudit identifiant aux autres réseaux élémentaires 20 connexes, et le nœud d'interconnexion 16 passe alors à l'étape suivante 120 de transmission de l'identifiant.

Lors de l'étape de transmission 120, l'envoi de l'identifiant est de préférence effectué en mode diffusé vers tous les autres réseaux élémentaires 20 connexes, c'est-à-dire vers tous les réseaux élémentaires 20 auxquels le nœud d'interconnexion 16 est connecté qui sont différents du réseau élémentaire 20 identifié lors de l'étape 100.

Les étapes de détermination 100 et de transmission 120 sont effectuées à nouveau en cas de connexion d'un nouveau réseau élémentaire 20 aux nœuds d'interconnexion 16 considérés ou en cas de suppression d'une connexion entre le nœud d'interconnexion 16 considéré et un réseau élémentaire 20 correspondant.

Lors de l'étape de calcul 130, le nœud d'interconnexion 16 calcule le chemin de transmission 36 de chaque paquet depuis un nœud source vers un nœud destinataire correspondant, ceci via son module de calcul 34 et à partir des différents identifiants de réseau élémentaire 20 déterminé(s) ou reçu(s) de la part d'autres nœuds d'interconnexion, le chemin de transmission 36 passant par un ou plusieurs réseaux élémentaires 20 et étant défini par lesdits réseaux élémentaires 20 traversés.

Lors de cette étape de calcul 130, le module de calcul 34 calcule de préférence la topologie des réseaux élémentaires 20 au sein du système de communication 22, par exemple en utilisant le protocole de routage à états de liens. Le module de calcul 34 en déduit ensuite le chemin de transmission 36 en choisissant le plus court chemin parmi les réseaux élémentaires 20 successifs se trouvant entre le nœud source et le nœud destinataire, ceci à partir de la topologie calculée.

De préférence, le calcul de ladite topologie est à nouveau effectué seulement lorsque deux réseaux élémentaires 20 ne sont plus raccordés par au moins un nœud d'interconnexion 16 ou bien lorsque deux réseaux élémentaires 20 sont nouvellement raccordés par au moins un nœud d'interconnexion 16.

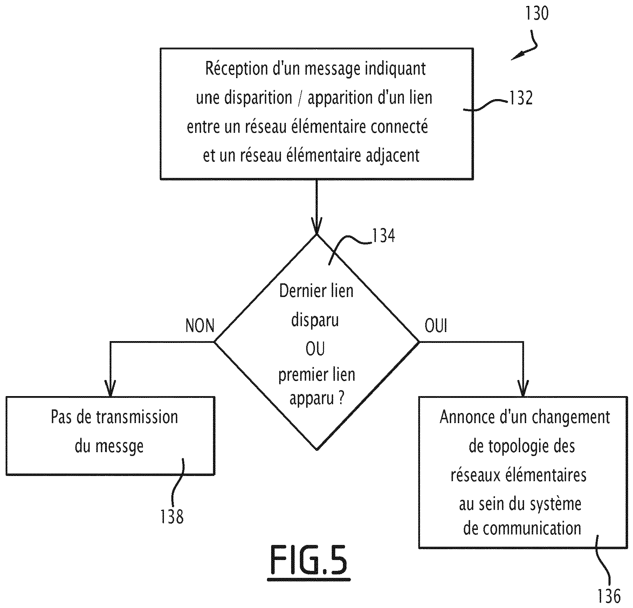

Ceci est par exemple mis en œuvre via un enchaînement de sous-étapes tel qu'illustré dans l'organigramme de la figure 5. Lors d'une sous-étape 132, le nœud d'interconnexion 16 reçoit un message indiquant soit une disparition d'un lien entre un réseau élémentaire 20 auquel le nœud d'interconnexion est connecté et un réseau élémentaire 20 adjacent dudit réseau connecté, soit au contraire un message indiquant l'apparition d'un lien entre le réseau élémentaire connecté et un réseau élémentaire 20 adjacent, un tel lien correspondant à la présence d'un nœud d'interconnexion 16 raccordant ledit réseau élémentaire connecté et ledit réseau élémentaire adjacent.

Le module de calcul 34 détermine alors :
- a) lorsque le message reçu lors de la sous-étape 132 est un message de disparition d'un lien entre le réseau élémentaire connecté et le réseau élémentaire adjacent correspondant, si le lien disparu était le dernier lien entre le réseau élémentaire connecté et le réseau élémentaire adjacent correspondant, et
- b) lorsque le message reçu lors de la sous-étape 132 est un message d'apparition d'un lien entre le réseau élémentaire connecté et le réseau élémentaire adjacent correspondant, si le lien apparu est le premier lien entre ledit réseau élémentaire connecté et ledit réseau élémentaire adjacent.

Lorsque le module de calcul 34 constate que l'une des deux conditions a) et b) précitées est vérifiée, ce qui correspond alors à un changement de topologie, il passe à la sous-étape suivante 136 pour annoncer ce changement de topologie aux autres réseaux élémentaires 20 au sein du système de communication 22.

Sinon, si aucune des deux conditions a) et b) précitées n'est vérifiée, ce qui signifie que malgré la disparition ou l'apparition d'un lien, la connectivité entre le réseau élémentaire connecté et le réseau élémentaire adjacent n'a pas évolué, c'est-à-dire que la topologie globale des réseaux élémentaires 20 au sein du système de communication 22 n'a pas été modifiée, alors le module de calcul 34 passe à la sous-étape 138 et bloque alors la transmission du message, afin que le message reçu lors de la sous-étape 132 ne soit pas transmis aux autres nœuds d'interconnexion 16. En effet, puisque le message reçu n'indique pas un changement de topologie, il est inutile de le transmettre aux autres nœuds d'interconnexion 16 du système de communication.

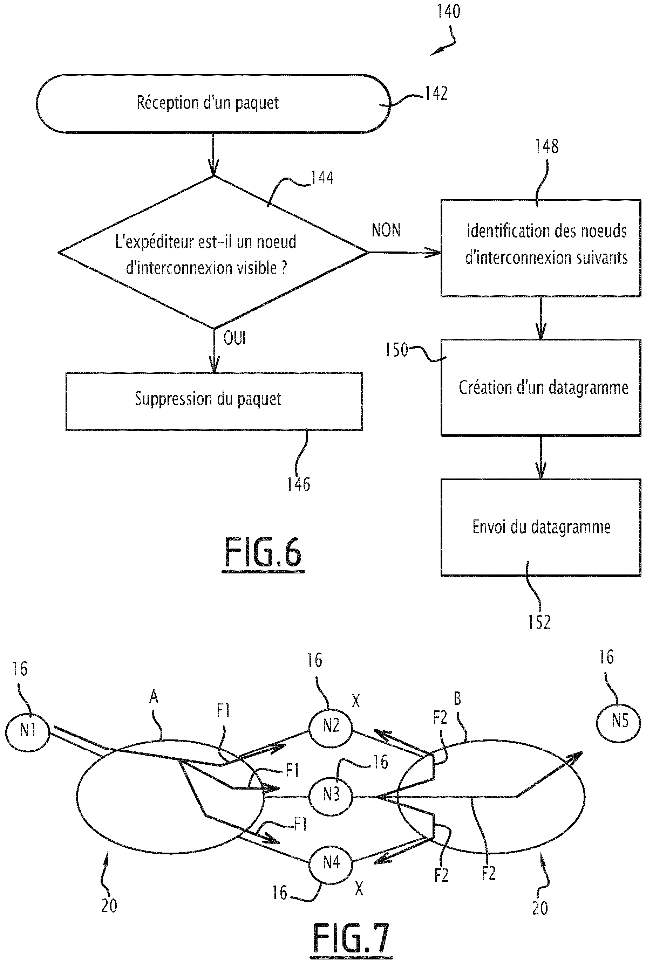

Après l'étape de calcul 130, le nœud d'interconnexion 16 passe à une étape suivante 140 de gestion des paquets reçus, cette étape de gestion 140 comportant par exemple un enchaînement de sous-étapes tel qu'illustré dans l'organigramme de la figure 6.

En cas de réception de la part du nœud d'interconnexion 16 d'un paquet à transmettre à un nœud destinataire (sous-étape 142), le nœud d'interconnexion 16 considéré commence par déterminer lors de la sous-étape suivante 144 si l'expéditeur du paquet est un nœud d'interconnexion 16 visible ou non. Un nœud d'interconnexion 16 est considéré comme visible par rapport aux nœuds d'interconnexion 16 considérés, si les deux nœuds d'interconnexion 16 sont reliés à un même sous-ensemble commun de réseaux élémentaires 20, autrement dit si les deux nœuds d'interconnexion 16 sont des nœuds d'interconnexion raccordant les mêmes réseaux élémentaires 20.

Si, lors de la sous-étape 144, le nœud d'interconnexion 16 considéré détermine que le nœud d'interconnexion 16 qui a expédié le paquet reçu est un nœud d'interconnexion visible, alors il passe à la sous-étape 146 au cours de laquelle il supprime, via son module de suppression 40, le paquet reçu, celui-ci ayant déjà été reçu de la part d'un autre nœud d'interconnexion 16 qui est connecté aux mêmes réseaux élémentaires 20 que lui, comme cela est représenté sur la figure 7.

Dans l'exemple de la figure 7, le nœud d'interconnexion expéditeur 16, noté N1, a expédié un paquet aux nœuds d'interconnexion suivants, notés N2, N3 et N4 (flèches F1), via le réseau élémentaire 20 noté A et suivant le chemin de transmission 36 précédemment calculé. Les nœuds d'interconnexion 16 notés N2, N3 et N4 sont trois nœuds d'interconnexion 16 reliant chacun le réseau élémentaire 20 noté A à un autre réseau élémentaire 20 noté B, et le nœud d'interconnexion 16 noté N3 a été le plus rapide pour retransmettre le paquet reçu à un nœud d'interconnexion suivant 16, noté N5, via le réseau élémentaire B et selon le chemin de transmission 36 calculé (flèches F2). En supposant alors que le nœud d'interconnexion 16 considéré est le nœud d'interconnexion noté N2 ou bien celui noté N4, alors il constatera lors de la sous-étape 144 que le paquet reçu de la part du nœud d'interconnexion N1 (flèches F1) a également été reçu de la part du nœud d'interconnexion N3 (flèches F2), et que ce dernier est un nœud d'interconnexion connecté aux mêmes réseaux élémentaires A, B que lui, et il supprimera alors le paquet lors de la sous-étape 146, comme symbolisé par le symbole 'X' en forme de croix sur la figure 7.

Si, lors de la sous-étape 144, le nœud d'interconnexion 16 considéré détermine au contraire que le nœud d'interconnexion 16 expéditeur n'est pas un nœud d'interconnexion visible, c'est-à-dire n'est pas un autre nœud d'interconnexion connecté aux mêmes réseaux élémentaires 20 que lui, alors il passe à la sous-étape 148 au cours de laquelle il identifie les nœuds d'interconnexion 16 suivants, puis crée lors de la sous-étape 150 un datagramme correspondant avant de l'envoyer lors de la sous-étape suivante 152 aux nœuds d'interconnexion suivants, tels qu'identifiés lors de la sous-étape 148. Les sous-étapes 148, 150 et 152 sont mises en œuvre par le module de réémission 42.

Le datagramme est un message comprenant à la fois le paquet et les adresses des nœuds d'interconnexion 16 suivants, le paquet contenant quant à lui uniquement des données utiles.

Dans l'exemple de la figure 7, la mise en œuvre des sous-étapes 148, 150 et 152 correspond à celle effectuée par le nœud d'interconnexion 16, noté N3. En effet, lorsque le nœud d'interconnexion N3 reçoit le paquet de la part du nœud d'interconnexion expéditeur N1 (flèches F1), il ne l'a pas encore reçu de la part des autres nœuds d'interconnexion 16 connectés aux mêmes réseaux élémentaires A, B que lui, c'est-à-dire de la part des nœuds d'interconnexion N2, N4. Le nœud d'interconnexion N3 identifie alors le nœud d'interconnexion suivant selon le chemin de transmission 36 calculé, en l'occurrence le nœud d'interconnexion N5 dans l'exemple de la figure 7, puis crée et envoie le datagramme à destination du nœud d'interconnexion suivant N5, ainsi que des autres nœuds d'interconnexion N2, N4 connectés aux mêmes réseaux élémentaires A, B que lui (flèches F2).

Ainsi, le procédé de communication et le nœud d'interconnexion 16 selon l'invention permettent de transmettre plus simplement et plus efficacement un paquet depuis un nœud source vers un nœud destinataire en identifiant un chemin de transmission, également appelé route, empruntant des réseaux élémentaires 20 successifs, alors qu'avec le procédé de communication selon l'état de la technique, le routage des paquets était effectué seulement à partir d'une topologie des nœuds et en identifiant alors une route empruntant des nœuds successifs, par exemple via un protocole de routage à états de liens.

Le fait de calculer, selon l'invention, la route à partir des réseaux élémentaires 20 identifiés permet d'avoir un protocole de routage qui est moins sensible à une évolution de la composition en nœuds 16, 18 du système de communication 22, le protocole de routage étant alors en particulier indépendant du nombre de nœuds d'interconnexion 16 entre les paires de réseaux élémentaires 20 voisins.

En outre, avec le procédé de communication selon l'invention, la topologie des réseaux élémentaires 20 au sein du système de communication 22 est mise à jour et transmise au sein du système de communication 22 uniquement si deux réseaux élémentaires 20 qui étaient précédemment raccordés entre eux (via au moins un nœud d'interconnexion 16) ne le sont plus, ou bien si deux réseaux élémentaires 20 qui n'étaient jusqu'à présent pas raccordés l'un à l'autre le sont nouvellement via au moins un nœud d'interconnexion 16. Ceci permet alors de diminuer significativement les calculs effectués pour maintenir à jour la topologie au sein du système de communication 22, notamment par rapport au procédé de communication de l'état de la technique où il était nécessaire de connaître en permanence les liens entre tous les nœuds du réseau, ce qui n'était alors particulièrement pas adapté aux réseaux instables, en particulier aux réseaux UHF.

L'homme du métier notera alors que tous les nœuds d'interconnexion 16 raccordant deux réseaux élémentaires 20 voisins sont des relais potentiels pour la transmission d'un paquet via ces deux réseaux élémentaires 20 voisins, et que seul le nœud d'interconnexion 16 le plus rapide sera effectivement un relais, la transmission du paquet par les autres nœuds d'interconnexion 16 entre ces deux réseaux élémentaires étant alors stoppée, comme décrit précédemment en regard des figures 6 et 7.

A titre complémentaire, l'homme du métier observera que le procédé de communication selon l'invention concerne d'une part, un plan de contrôle, et d'autre part, un plan de données. Les aspects associés au plan de contrôle sont l'identification unique des réseaux élémentaires, c'est-à-dire la détermination de l'identifiant unique faite lors de l'étape 100 ; l'annonce par les nœuds d'interconnexion 16 de ces réseaux élémentaires 20 et des nœuds d'interconnexion 16 qui lui sont raccordés, correspondant à l'étape 120 de transmission de chaque identifiant calculé ; et le filtrage des boucles en cas d'une annonce identique reçue de la part de plusieurs nœuds d'interconnexion 16 correspondant à l'étape 110 de mise en file d'attente avec annulation de transmission le cas échéant. Un dernier aspect concernant le plan de contrôle est le calcul du chemin de transmission 36, également appelé route, avec les réseaux élémentaires 20 successifs par lesquels le paquet correspondant devra transiter.

Les aspects concernant le plan de données sont l'acheminement des données selon la route entre les réseaux élémentaires 20 successifs vers les nœuds destinataires concernés; l'envoi du paquet vers tous les nœuds d'interconnexion 16 entre deux réseaux élémentaires 20 voisins raccordés le long de la route calculée, correspondant aux flèches F1 de la figure 7 ; la retransmission par les nœuds d'interconnexion 16 vers tous les prochains nœuds d'interconnexion 16 dudit paquet, correspondant à la sous-étape 152 de la figure 6 et aux flèches F2 de la figure 7. Un dernier aspect concernant le plan de données est le fait qu'un paquet reçu est relayé seulement par le nœud d'interconnexion 16 le plus rapide, comme décrit en regard des figures 6 et 7, ce qui entraîne la suppression du paquet lors de la sous-étape 146 de la figure 6 lorsque le nœud d'interconnexion 16 considéré a reçu le paquet via un réseau élémentaire 20 donné et que ce même paquet est en attente d'émission vers ce réseau élémentaire 20.

En référence aux figures 2 et 7, il a été considéré un système de communication comportant deux ou trois réseaux élémentaires 20. Bien entendu, l'invention est susceptible d'être mise en œuvre dans le cas d'un nombre N quelconque de réseaux élémentaires 20, N étant un nombre entier, pouvant être strictement supérieur à 2.

Il a été considéré principalement des réseaux élémentaires 20 basés sur des communications de type UHF ou de type VHF. Bien sûr, l'invention est susceptible d'être mise en œuvre avec des types variés de protocoles de communication, tels que les protocoles associés aux normes 2G, 3G et/ou 4G.

On conçoit ainsi que le procédé de communication et le nœud d'interconnexion 16 selon l'invention sont plus efficaces, et sont en particulier plus adaptés aux réseaux ou systèmes de communication instables.

## Revendications

1. Procédé de communication au sein d'un système de communication (22) comprenant une pluralité de réseaux élémentaires (20) et un ou plusieurs nœuds d'interconnexion (16), chaque réseau élémentaire (20) comportant plusieurs nœuds de radiocommunication (18) reliés entre eux par des liaisons de radiocommunication (24) selon un même protocole de radiocommunication, deux réseaux élémentaires voisins (20) étant reliés via un ou plusieurs nœuds d'interconnexion (16),
le procédé étant mis en oeuvre par chaque nœud d'interconnexion (16) et étant **caractérisé en ce qu'**il comprend les étapes suivantes :
- détermination (100) d'un identifiant unique pour chaque réseau élémentaire (20) auquel le nœud d'interconnexion (16) est connecté ;
- transmission (120) de chaque identifiant déterminé vers le ou les réseaux élémentaires autres que le réseau élémentaire correspondant à l'identifiant déterminé ; et
- calcul (130), à partir des identifiants de réseaux élémentaires, d'un chemin (36) de transmission d'au moins un paquet de données entre un nœud source et un nœud destinataire, le chemin de transmission (36) passant par un ou plusieurs réseaux élémentaires (20), le nœud source et le nœud destinataire étant chacun un nœud parmi un nœud de radiocommunication (18) et un nœud d'interconnexion (16).

2. Procédé de communication selon la revendication 1, dans lequel les étapes de détermination (100) et de transmission (120) sont effectuées à nouveau en cas de connexion d'un nouveau réseau élémentaire (20) au nœud d'interconnexion (16) ou bien en cas de suppression d'une connexion entre le nœud d'interconnexion (16) et un réseau élémentaire (20) correspondant.

3. Procédé de communication selon l'une quelconque des revendications précédentes, dans lequel le procédé comprend en outre, après l'étape de détermination (100) et préalablement à l'étape de transmission (120), l'étape suivante :
- mise en file d'attente (110) de l'identifiant déterminé avant son éventuelle transmission vers le ou les autres réseaux élémentaires ;
l'étape (120) de transmission de l'identifiant déterminé étant annulée lorsque l'identifiant déterminé est, au cours de l'étape de mise en file d'attente (110), reçu de la part d'un autre nœud d'interconnexion qui est connecté au ou aux mêmes réseaux élémentaires que ledit nœud d'interconnexion (16).

4. Procédé de communication selon l'une quelconque des revendications précédentes, dans lequel le procédé comprend en outre, après l'étape de détermination (110), l'étape suivante :
- suppression (146) d'un paquet reçu lorsque celui-ci est reçu de la part d'un autre nœud d'interconnexion connecté au ou aux mêmes réseaux élémentaires que ledit nœud d'interconnexion.

5. Procédé de communication selon l'une quelconque des revendications précédentes, dans lequel le procédé comprend en outre, après l'étape de calcul (130), l'étape suivante :
- réémission (152) d'un paquet reçu lorsque celui-ci n'a pas été préalablement reçu de la part d'un autre nœud d'interconnexion connecté au ou aux mêmes réseaux élémentaires que ledit nœud d'interconnexion, ledit paquet étant alors réémis vers le réseau élémentaire suivant, selon le chemin de transmission (36) calculé.

6. Procédé de communication selon l'une quelconque des revendications précédentes, dans lequel, lors de l'étape de détermination (100), l'identifiant unique du réseau élémentaire est déterminé en fonction d'une gamme de fréquences associée aux liaisons de radiocommunication reliant les nœuds de radiocommunication du réseau élémentaire, d'un canal de communication associé auxdites liaisons de radiocommunication et d'au moins une adresse d'un nœud de radiocommunication du réseau élémentaire.

7. Procédé de communication selon l'une quelconque des revendications précédentes, dans lequel le procédé comprend, lors de l'étape (130) de calcul du chemin de transmission (36), le calcul d'une topologie des réseaux élémentaires (20) au sein du système de communication (22) en utilisant un protocole de routage à états de liens entre les réseaux élémentaires, et le chemin de transmission (36) est alors calculé à partir de ladite topologie.

8. Procédé de communication selon la revendication 7, dans lequel le calcul de la topologie des réseaux élémentaires (20) au sein du système de communication (22) est effectué à nouveau seulement lorsque deux réseaux élémentaires (20) ne sont plus connectés ou bien lorsque deux réseaux élémentaires (20) sont nouvellement connectés.

9. Procédé de communication selon l'une quelconque des revendications précédentes, dans lequel chaque protocole de radiocommunication est un protocole avec accès multiple à répartition dans le temps, TDMA.

10. Procédé de communication selon l'une quelconque des revendications précédentes, dans lequel au sein d'un même réseau élémentaire (20), chaque nœud de radiocommunication (18) est à portée radio d'au moins un autre nœud de radiocommunication (18) dudit réseau élémentaire.

11. Procédé de communication selon l'une quelconque des revendications précédentes, dans lequel tous les nœuds de radiocommunication (18) d'un même réseau élémentaire (20) sont configurés pour communiquer via une unique gamme de fréquences choisie parmi la gamme VHF et la gamme UHF.

12. Programme d'ordinateur comprenant des instructions logicielles, qui lorsqu'elles sont exécutées par un processeur, mettent en œuvre un procédé selon l'une quelconque des revendications précédentes.

13. Nœud d'interconnexion (16) destiné à être connecté à au moins un réseau élémentaire (20) au sein d'un système de communication (22) comprenant une pluralité de réseaux élémentaires (20) et un ou plusieurs nœuds d'interconnexion (16), chaque réseau élémentaire (20) comportant plusieurs nœuds de radiocommunication (18) reliés entre eux par des liaisons de radiocommunication (24) selon un même protocole de radiocommunication, deux réseaux élémentaires voisins (20) étant reliés via un ou plusieurs nœuds d'interconnexion (16),
**caractérisé en ce qu'**il comprend :
- un module de détermination (30) configuré pour déterminer un identifiant unique pour chaque réseau élémentaire auquel ledit nœud d'interconnexion est connecté ;
- un module de transmission (32) configuré pour transmettre chaque identifiant déterminé vers le ou les réseaux élémentaires autres que le réseau élémentaire correspondant à l'identifiant déterminé ; et
- un module de calcul (34) configuré pour calculer, à partir des identifiants de réseaux élémentaires, un chemin (36) de transmission d'au moins un paquet de données entre un nœud source et un nœud destinataire, le chemin de transmission (36) passant par un ou plusieurs réseaux élémentaires (20), le nœud source et le nœud destinataire étant chacun un nœud parmi un nœud de radiocommunication (18) et un nœud d'interconnexion (16).

14. Poste de radiocommunication (10) comprenant un nœud d'interconnexion (16) et un ou plusieurs nœuds de radiocommunication (18, 14), **caractérisé en ce que** le nœud d'interconnexion (16) est conforme à la revendication précédente.

## Patentansprüche

1. Kommunikationsverfahren in einem Kommunikationssystem (22), das eine Mehrzahl von Elementarnetzen (20) und einen oder mehrere Verbindungsknoten (16) umfasst, wobei jedes Elementarnetz (20) mehrere Funkkommunikationsknoten (18), die untereinander durch Funkkommunikationsverbindungen (24) nach einem selben Funkkommunikationsprotokoll verbunden sind, aufweist, wobei zwei benachbarte Elementarnetze (20) über einen oder mehrere Verbindungsknoten (16) verbunden sind,
wobei das Verfahren von jedem Verbindungsknoten (16) durchgeführt wird und **dadurch gekennzeichnet ist, dass** es die folgenden Schritte umfasst:
- Festlegen (100) eines einzigartigen Kennzeichens für jedes Elementarnetz (20), mit dem der Verbindungsknoten (16) verbunden ist;
- Senden (120) jedes festgelegten Kennzeichens zu dem oder den Elementarnetzen, die andere sind als das dem festgelegten Kennzeichen entsprechende Elementarnetz; und
- Berechnen (130) eines Weges (36) zum Übertragen mindestens eines Datenpakets zwischen einem Quellenknoten und einem Zielknoten aus den Kennzeichen der Elementarnetze, wobei der Übertragungsweg (36) ein oder mehrere Elementarnetze (20) passiert, wobei der Quellenknoten und der Zielknoten jeweils ein Knoten, ausgewählt aus einem Funkknoten (18) und einem Verbindungsknoten (16) ist.

2. Kommunikationsverfahren nach Anspruch 1, bei dem die Schritte des Festlegens (100) und Sendens (120) im Falle einer Verbindung eines neuen Elementarnetzes (20) mit einem Verbindungsknoten (16) oder auch im Falle eines Wegfalls einer Verbindung zwischen dem Verbindungsknoten (16) und einem entsprechenden Elementarnetz (20) erneut durchgeführt werden.

3. Kommunikationsverfahren nach einem beliebigen der vorhergehenden Ansprüche, bei dem das Verfahren außerdem nach dem Festlegungsschritt (100) und vor dem Sendeschritt (120) den folgenden Schritt umfasst:
- Setzen (110) des festgelegten Kennzeichens in die Warteschlange vor seinem möglichen Senden zu dem oder den anderen Elementarnetzen;
wobei der Sendeschritt (120) des festgelegten Kennzeichens annulliert wird, wenn das festgelegte Kennzeichen während des Schrittes des Setzens (110) in die Warteschlange seitens eines anderen Verbindungsknotens empfangen wird, der mit dem oder den selben Elementarnetzen wie der Verbindungsknoten (16) verbunden ist.

4. Kommunikationsverfahren nach einem beliebigen der vorhergehenden Ansprüche, bei dem das Verfahren nach dem Festlegungsschritt (110) außerdem den folgenden Schritt umfasst:
- Entfernen (146) eines empfangenen Pakets, wenn dieses von einem anderen Verbindungsknotens empfangenen wurde, der an dasselbe oder dieselben Elementarnetze wie der Verbindungsknoten angeschlossen ist.

5. Kommunikationsverfahren nach einem beliebigen der vorhergehenden Ansprüche, bei dem das Verfahren außerdem nach dem Berechnungsschritt (130) den folgenden Schritt umfasst:
- erneutes Senden (152) eines empfangenen Pakets, wenn dieses nicht vorher von einem anderen Verbindungsknoten, der an dasselbe oder dieselben Elementarnetze wie der Verbindungsknoten angeschlossen ist, empfangen wurde, wobei das Paket dann erneut zu dem folgenden Elementarnetz nach dem berechneten Übertragungsweg (36) gesendet wird.

6. Kommunikationsverfahren nach einem beliebigen der vorhergehenden Ansprüche, bei dem bei dem Festlegungsschritt (100) das einzigartige Kennzeichen des Elementarnetzes abhängig von einem Frequenzbereich, der den Funkverbindungen, die die Funkkommunikationsknoten des Elementarnetzes verbinden, zugeordnet ist, von einem Kommunikationskanal, der den Kommunikationsverbindungen zugeordnet ist, und von mindestens einer Adresse eines Funkkommunikationsknotens des Elementarnetzes festgelegt wird.

7. Kommunikationsverfahren nach einem beliebigen der vorhergehenden Ansprüche, bei dem das Verfahren bei dem Schritt (130) des Berechnens des Übertragungsweges (36) das Berechnen einer Topologie der Elementarnetze (20) in dem Kommunikationssystem (22) unter Verwendung eines Link-State-Routing-Protokolls zwischen den Elementarnetzen umfasst und der Übertragungsweg (36) dann aus der Topologie berechnet wird.

8. Kommunikationsverfahren nach Anspruch 7, bei dem das Berechnen der Topologie der Elementarnetze (20) in dem Kommunikationssystem (22) nur erneut durchgeführt wird, wenn zwei Elementarnetze (20) nicht mehr verbunden sind oder wenn zwei Elementarnetze (20) neu verbunden sind.

9. Kommunikationsverfahren nach einem beliebigen der vorhergehenden Ansprüche, bei dem jedes Funkkommunikationsprotokoll ein Protokoll mit Zeitmultiplexzugriff, TDMA, ist.

10. Kommunikationsverfahren nach einem beliebigen der vorhergehenden Ansprüche, bei dem in einem selben Elementarnetz (20) jeder Funckommunikationsknoten (18) in Funkreichweite von mindestens einem anderen Funkkommunikationsknoten (18) des Elementarnetzes ist.

11. Kommunikationsverfahren nach einem beliebigen der vorhergehenden Ansprüche, bei dem alle Funkkommunikationsknoten (18) eines selben Elementarnetzes (20) zur Kommunikation über einen einzigen Frequenzbereich, ausgewählt aus dem VHF Bereich und dem UHF Bereich, ausgebildet sind.

12. Rechenprogramm, das Softwarebefehle aufweist, die, wenn sie von einem Prozessor ausgeführt werden, ein Verfahren nach einem beliebigen der vorhergehenden Ansprüche durchführen.

13. Verbindungsknoten (16), der mit mindestens einem Elementarnetz (20) in einem Kommunikationssystem (22) verbindbar ist, das eine Mehrzahl von Elementarnetzen (20) und einen oder mehrere Verbindungsknoten (16) umfasst, wobei jedes Elementarnetz (20) mehrere Funkkommunikationsknoten (18), die untereinander durch Funkkommunikationsverbindungen (24) gemäß einem selben Funkkommunikationsprotokoll verbunden sind, aufweist, wobei zwei benachbarte Elementarnetze (20) über einen oder mehrere Verbindungsknoten (16) verbunden sind,
**dadurch gekennzeichnet, dass** er umfasst:
- ein Bestimmungsmodul (30), das zum Festlegen eines einzigartigen Kennzeichens für jedes Elementarnetz, mit dem der Verbindungsknoten verbunden ist, ausgebildet ist;
- ein Sendemodul (32), das zum Senden jedes festgelegten Kennzeichens zu dem oder den Elementarnetzen, die andere sind als das dem festgelegten Kennzeichen entsprechende Elementarnetz, ausgebildet ist und
- ein Berechnungsmodul (34), das zum Berechnen eines Weges (36) zum Übertragen mindestens eines Datenpakets zwischen einem Quellenknoten und einem Zielknoten aus den Kennzeichen der Elementarnetze ausgebildet ist, wobei der Übertragungsweg (36) ein oder mehrere Elementarnetze (20) passiert, wobei der Quellenknoten und der Zielknoten jeweils ein Knoten, ausgewählt aus einem Funkknoten (18) und einem Verbindungsknoten (16) ist.

14. Funkkommunikationsstation (10), die einen Verbindungsknoten (16) und einen oder mehrere Funkkommunikationsknoten (18, 14) umfasst, **dadurch gekennzeichnet, dass** der Verbindungsknoten (16) nach dem vorhergehenden Anspruch ausgebildet ist.

## Claims

1. A communication method within a communication system (22) comprising a plurality of elementary networks (20) and one or several interconnection nodes (16), each elementary network (20) including several radiocommunication nodes (18) connected to each other through radiocommunication links (24) according to a same radiocommunication protocol, two neighboring elementary networks (20) being connected via one or several interconnection nodes (16),
the method being applied by each interconnection node (16) and being **characterized in that** it comprises the following steps:
- determining (100) a unique identifier for each elementary network (20) to which the interconnection node (16) is connected;
- transmitting (120) each determined identifier to the elementary network(s) other than the elementary network corresponding to the determined identifier; and
- computing (130), from identifiers of elementary networks, a transmission path (36) of at least one data packet between a source node and an destination node, the transmission path (36) passing through one or several elementary networks (20), the source node and the destination node each being a node from among a radiocommunication node (18) and an interconnection node (16).

2. The communication method according to claim 1, wherein the determination (100) and transmission (120) steps are again carried out in the case of connection of a new elementary network (20) to the interconnection node (16) or else in the case of suppression of a connection between the interconnection node (16) and a corresponding elementary network (20).

3. The communication method according to any of the preceding claims, wherein the method further comprises, after the determination step (100) and before the transmission step (120), the following step:
- putting into a queue (110) the determined identifier before its potential transmission to the other elementary network(s);
the step (120) for transmitting the determined identifier being canceled when the determined identifier is, during the queuing step (110), received from another interconnection node which is connected to the same elementary network(s) as said interconnection node (16).

4. The communication method according to any of the preceding claims, wherein the method further comprises, after the determination step (110), the following step:
- suppression (146) of a received packet when the latter is received from another interconnection node connected to the same elementary network(s) as said interconnection node.

5. The communication method according to any of the preceding claims, wherein the method further comprises, after the computing step (130), the following step:
- reemitting (152) a received packet when the latter has not been received beforehand from another interconnection node connected to the same elementary network(s) as said interconnection node, said packet then being reemitted towards the following elementary network, along the computed transmission path (36).

6. The communication method according to any of the preceding claims, wherein, during the determination step (100), the unique identifier of the elementary network is determined depending on a range of frequencies associated with the radiocommunication links connecting the radiocommunication nodes of the elementary network, on a communication channel associated with said radiocommunication links and on at least one address of a radiocommunication node of the elementary network.

7. The communication method according to any of the preceding claims, wherein the method comprises, during the step (130) for computing the transmission path (36), the computation of a topology of the elementary networks (20) within the communication system (22) by using a routing protocol with states of links between the elementary networks, and the transmission path (36) is then computed from said topology.

8. The communication method according to claim 7, wherein the computation of the topology of the elementary networks (20) within the communication system (22) is again carried out only when two elementary networks (20) are no longer connected or else when two elementary networks (20) are newly connected.

9. The communication method according to any of the preceding claims, wherein each radiocommunication protocol is a time division multiple access protocol TDMA.

10. The communication method according to any of the preceding claims, wherein, within a same elementary network (20), each radiocommunication node (18) is within radio range of at least one other radiocommunication node (18) of said elementary network.

11. The communication method according to any of the preceding claims, wherein all the radiocommunication nodes (18) of a same elementary network (20) are configured for communicating via a unique range of frequencies selected from among the VHF range and the UHF range.

12. A computer program comprising software instructions, which, when they are executed by a processor, apply a method according to any of the preceding claims.

13. An interconnection node (16) intended to be connected to at least one elementary network (20) within a communication system (22) comprising a plurality of elementary networks (20) and one or several interconnection nodes (16), each elementary network (20) including several radiocommunication nodes (18) connected to each other through radiocommunication links (24) according to a same radiocommunication protocol, two neighboring elementary networks (20) being connected via one or several interconnection nodes (16),
**characterized in that** it comprises:
- a determination module (30) configured for determining a unique identifier for each elementary network to which said interconnection node is connected;
- a transmission module (32) configured for transmitting each determined identifier to the elementary network(s) other than the elementary network corresponding to the determined identifier; and
- a computing module (34) configured for computing, from the identifiers of elementary networks, a transmission path (36) of at least one packet of data between a source node and an destination node, the transmission path (36) passing through one or several elementary networks (20), the source node and the destination node each being a node from among a radiocommunication node (18) and an interconnection node (16).

14. A radiocommunication station (10) comprising an interconnection node (16) and one or several radiocommunication nodes (18, 14), **characterized in that** the interconnection node (16) is according to the preceding claim.
